# EUROPEAN PATENT SPECIFICATION

(11) **EP 0 892 254 B1**
(45) Date of publication and mention of the grant of the patent: **03.09.2003**
(21) Application number: 97830705.6
(22) Date of filing: 23.12.1997
(51) Int. Cl.: G01G 11/00, B28C 5/40

(54) **Automatic separator-weighing device for metal fibres mixed with cement mixtures**
Vorrichtung zum Abscheiden und Wiegen von mit Zementmischungen vermischten metallischen Fasern
Séparateur automatique et balance pour fibres métalliques melangées avec des mélanges de ciment

(30) Priority: 18.07.1997 IT AN970039
(43) Date of publication of application: 20.01.1999
(73) Proprietor: Officine Meccaniche Galletti O.M.G. - S.r.l., Perugia, Fraz. Ponte Valleceppi (PG) (IT)
(72) Inventor: Galletti, Paolo, Perugia, Fraz. Ponte Valleceppi (PG) (IT)
(74) Representative: Baldi, Claudio

(56) References cited:
- FR-A- 1 267 688
- LU-A- 85 775
- US-A- 4 023 779
- US-A- 5 477 957
- PATENT ABSTRACTS OF JAPAN vol. 013, no. 320 (M-853), 20 July 1989 & JP 01 105704 A (KURARAY CO LTD;OTHERS: 01), 24 April 1989
- SOVIET INVENTIONS ILLUSTRATED Section PQ, Week 86125 April 1986 Derwent Publications Ltd., London, GB; Class P64, AN 86080216 XP002079492 & SU 1 175 722 A (CHELYABINSK POLY) , 30 August 1985
- SOVIET PATENTS ABSTRACTS Section PQ, Week 944724 November 1994 Derwent Publications Ltd., London, GB; Class P64, AN 93318776 XP002079493 & SU 1 765 019 A (VASILEV V YA) , 30 September 1992

## Description

This patent application concerns an automatic separator - weighing device for metal fibres mixed to cement mixtures.

It is common knowledge that cement is mixed in its fluid state with metal fibres which are generally in the form of fine bars or needles.

This technique is particularly efficient in that these fine metal fragments, form a reinforcement net once the cement mixture has been cast and is solidified; in other words, these metal fibres substantially reinforce the cement into which they are mixed.

The net formed by the metal fibres gives the double advantage of reinforcing the cement structure and providing a certain degree of elasticity which is determining to prevent the risk of cracks in the cement mass as a result of high and sudden temperature variations.

This technique is in fact widely used despite a fundamental problem resulting from the difficulty of handling and mixing the metal fibres to the cement mixture; in particular these problems are due to the fact that these metal fibres are used as fine bars or needles.

During packaging, transport and handling, the fibres are massed together and tend to tangle and become compacted often forming an unravelable mass.

Moreover, this negative "massing effect" becomes even more of a problem in the case of the metal fibres produced as bars with ends bent to 90°.

The ends are in fact bent in this way so that they hook to each other thus ensuring better attachment of the metal bars in the cement mixture; it is however obvious that the bent ends of the bars can just as easily hook together before they are mixed into the cement mixture.

It is also evident that the metal fibres can not be mixed into the fluid cement mixture while they are tangled; they must in fact first be separated and then placed in small quantities in the cement mixer.

It is the very separation of the tangled metal fibres which most penalises the technique in question; this can be carried out by hand involving time and labour costs which are easy to imagine. Separating devices are also used, see for example US-A-4 023 779 and LU-A-85 775.

Moreover the task is made more difficult for the workers who perform it in that the metal fibres must be mixed with the cement mixture in specific quantities, in other words it is necessary to evaluate a specific weight of metal fibres according to the volume of the cement mixture.

The purpose of this invention is to automatize the separation of the tangled metal fibres; this has been achieved by designing an innovative device which not only ensures a higher rate of production per hour with respect to manual labour but also works in series with the cement mixer without any further manual intervention.

Moreover the device in question also acts as dosing device in that it is possible to set and select the correct weight of metal fibres with respect to the volume of the cement mixture, from time to time.

The device according to the invention consists of a special hopper into which the bundle of tangled metal fibres is placed; in particular the hopper features side walls which diverge from the back towards the front and an internal ascending conveyor belt.

The bundle of fibres loaded in the hopper falls onto the conveyor belt which transports it to the exterior through an opening, at the front of the hopper, which is delimited by the diverging side walls.

It being provided that immediately outside the opening there is a selector roller having horizontal axis and a number of longitudinal blades positioned radially having a saw-toothed outer edge.

It is important to note that the particular diverging design of the side walls of the hopper has a particular technical - operating reason.

It was considered in fact that in a hopper with parallel side walls it would be difficult for the mass of fibres to move towards the opening in that walls of the kind would have undoubtedly caused friction and consequently a considerable resistance to the forward movement of the bundle.

The risk of this unwanted effect occurring would in fact be great in that a well bound bundle is extremely compact and almost like a solid body; in this sense it is understandable that its interference with even only one of the side walls of the hopper would easily hinder a smooth forward movement.

Thanks however to the divergence of the side walls, the hopper according to the invention has an internal cross-section which widens thus substantially reducing the possibility of interference between the side walls and the bundle of metal fibres.

Once the bundle of fibres has passed through the opening and interferes with the horizontal axis roller, the metals fibres are selected and separated; in other words this selection is performed directly by the saw-toothed blades of the roller.

In particular, the roller rotates so that its blades interfere with the front edge of the bundle from bottom to top.

Even if in fact the roller rotates continuously, for the sake of clarity, it is considered important to describe the function of each of its blades as though this were the result of three distinct operating phases performed during the 180° rotation required for each blade to move from the bottom cutting position to the top cutting position.

During the first part of its rotation, each blade hooks the metal fibres which it touches; the blade then energetically pulls the metal fibres which have been hooked and separates (or tears) them from the adjacent metal fibres; it then shoots the fibres to the top.

Moreover the rotation of the roller ensures that the metal fibres are projected upwards and over the roller to then fall - separated - below the roller.

In this respect it should be noted that the device in question may be mounted directly at the mouth of a cement mixer so that the "shower" of separated metal fibres falls first into a small conveyer hopper mounted at the front of the selector roller, at a height slightly below, and then directly into the inner compartment of the mixer itself.

Alternatively the device in question could be mounted at a certain distance from the mixer, with a conveyor belt downstream from the selector roller, which collects the separated metal fibres and transports them into the cement mixture.

Another advantage of the device according to the invention is that it can also dose the weight of the metal fibres; the hopper (including the conveyor belt on the bottom) is in fact mounted on a number of loading cells which determine the initial weight of the bundle placed on the conveyor belt and the remaining weight once a part of the fibres has been selected and "thrown" out.

By setting the device, it is possible to activate the loading cells and deactivate the device when the cells read that the correct weight of metal fibres with respect to the volume of cement has been selected.

For major clarity the description of the invention continues with reference to the enclosed drawing which is intended for purposes of illustration and not in a limiting sense, where:
- figure 1 is a side view of the device in question with one of the side walls of the hopper removed;
- figure 2 is a top view of figure 1, with a small section of the cover containing the selector roller removed and the reproduction of an enlarged detail of the edge profile of a blade of the roller.

With reference to the enclosed drawings the device in question is characterised by a large hopper (1) with side walls (2) which diverge from back to front, having an internal ascending conveyor belt (3) running as a closed circuit around two rollers (3a and 3b) having horizontal axis; it being provided that the first (3a) is positioned at the back of the hopper (1) close to the bottom, while the second (3b) is approximately half way up the hopper (1) in a position which is slightly more internal with respect to an opening (4) at the front of the hopper (1).

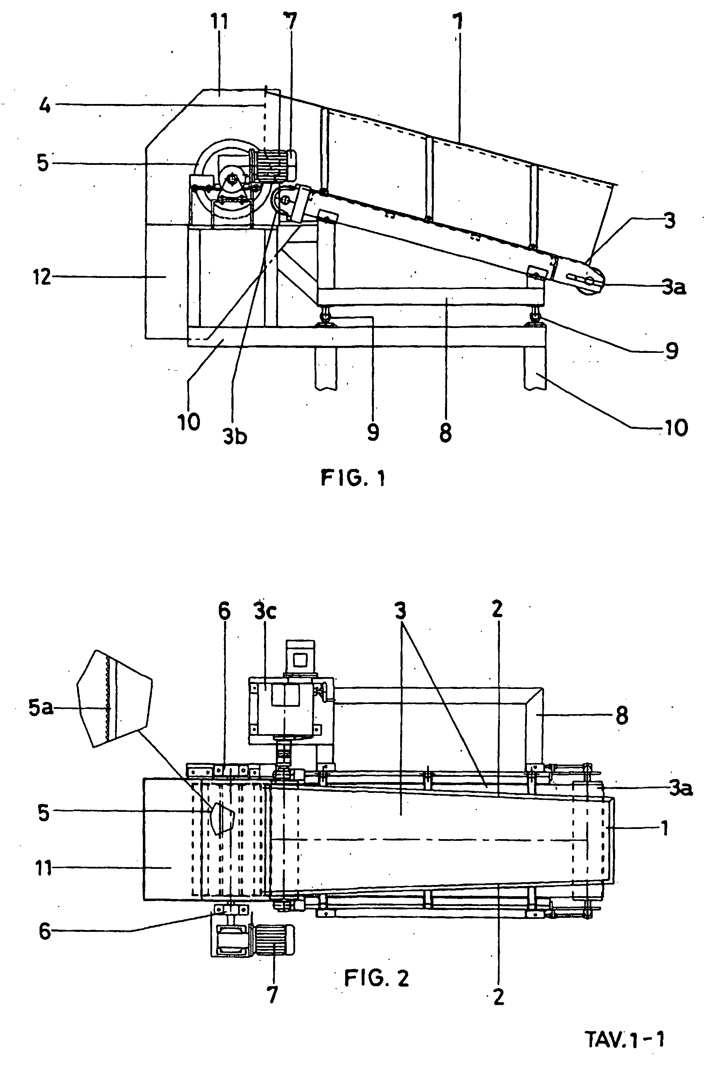

In particular, the roller (3b) which is positioned higher is rotated by its own motor (3c) mounted next to the hopper (1), as shown in figure 2.

Said belt (3) carries the bundle of metal fibres which has been loaded into the hopper (1) outside the hopper through the front opening (4).

It being provided that immediately outside the front window (4) there is a special selector roller (5) with horizontal axis, sustained by supports (6) and rotated by a respective motor (7) with reduction gear.

It being provided that the roller (5) is fitted for its full length with a series of equally spaced radial blades (5a) having a free saw-toothed edge, as shown in the enlarged detail in figure 2.

Hopper (1) is supported by a frame (8) which is in turn supported - by means of interposing loading cells (9) by the main bearing frame (10) which also directly supports the selector roller (5).

It is evident that the loading cells (9) permit the device according to the invention to act as a weight dosing device functioning "by subtraction".

Said loading cells (9) in fact co-operate with an electronic control unit (or presetter); this control unit, on which the weight of the fibres to be dosed is set, immediately stops the device as soon as the initial weight of the bundle of fibres loaded into the hopper decreases by the preset weight value.

This particular operating principle of the device in question - and above all the weighing logic "by subtraction" - ensures absolute precision of each weighing operating in that it also calculates in. each quantity weighed the part of "flying" metal fibres through the outlet of the conveyor belt at the point - downstream from the selector roller (5) on which the fibres collect.

It is evident that it would not be possible to weigh the doses with this degree of precision according to a principle of "addition", for instance, by mounting the weighing device at the collection point - downstream from the selector roller (5) - of the separated metal fibres.

In this case, even by stopping the machine once the preset weight at the collection point was reached - would not prevent the "flying" metal fibres (never of a constant quantity) from being added to the weighed fibres, consequently compromising the accuracy of the dosed quantity.

A second advantage of this "subtraction" weighing logic, is that it prevents the formation of new agglomerates of metal fibres downstream from the selector roller (5) in that the metal fibres separated from the selector roller (5) can immediately be carried towards the mixer, without further stops.

If, on the other hand; weighing were performed "by addition" at the collection point of the fibres downstream from the roller (5), the fibres would have to remain at this collection point for the time required to reach the preset quantity; during this forced stop, they could easily become tangled again, very probably giving rise to a new though smaller bundle than the first (2), but just as tangled.

The number (11) refers to the cover containing the selector roller (5); this cover (11) prevents the disordered dispersion of the metal fibres that the roller (5) tears from the bundle and "projects" upwards.

Said fibres in fact bounce against the internal walls of the cover (11) - downstream from the roller (5) - and thus fall downwards, into a small hopper (12) positioned at a lower height with respect to that of the roller (5) by means of which the fibres fall by gravity directly into a cement mixer or onto a conveyor belt which carries them into the mixer.

## Claims

1. An automatic separating device for metal fibres mixed with cement mixtures **characterised by**:
• a loading hopper (1) with diverging side walls (2) housing a conveyor belt (3) on the bottom, running in a closed circuit in an ascending direction, around two rollers having horizontal axis; it being provided that the first (3a), driven, roller is positioned at the back of the hopper (1) close to the bottom, while the second roller (3b), which is provided with a motor (3c), is approximately half way up the hopper in a position which is slightly more internal with respect to an opening (4) at the front of the hopper (1); it being provided that the hopper (1) and said conveyor belt (3) are supported by a frame (8);
• a selector roller (5) having horizontal axis supported, together with its reduction gear (7) in a slightly more external position with respect to the front opening (4) of the hopper (1); it being provided that said roller (5) is fitted with a series of equally spaced radial blades (5a) having a free saw-toothed edge;
• a cover (11) housing the above selector roller (5) and designed to carry the metal fibres downstream from the same, towards a small hopper (12) whose unloading mouth is at a slightly lower level with respect to that of the roller (5);
• a supporting frame (10) which sustains the above supporting frame (8) of the hopper (1) and of the conveyor belt (3) and of the selector roller (5).

2. The automatic separating device of claim 1, further including:
• a series of loading cells (9) placed between said supporting frame (10) and said frame (8) which supports the hopper (1) and the conveyor belt (3);
• an electronic command unit which controls the entire device; it being provided that said control unit, on which the weight of the fibres to be dosed is set, co-operate with the above loading cells (9) in order to immediately stop the device as soon as the initial weight of the bundle of fibres loaded into the hopper decreases by the preset weight value.

## Patentansprüche

1. Automatische Trennvorrichtung für Metallfasern, die unter Zementmischungen gemischt werden, **dadurch gekennzeichnet, dass** sie folgendes umfasst:
• einen Befüllungstrichter (1) mit divergent verlaufenden Seitenwänden (2), der auf seinem Boden ein aufwärts laufendes Förderband (3) enthält, das in einem geschlossenen Kreislauf um zwei Rollen mit horizontaler Achse gewickelt ist, wobei vorgesehen ist, dass die erste, angetriebene, Rolle (3a) auf der Rückseite des Trichters (1) am Boden angebracht ist, während die zweite Rolle (3b), die mit einem Motor (3c) versehen ist, sich etwa auf mittlerer Höhe des Trichters leicht innerhalb eines Fensters (4) befindet, das auf der Vorderseite des Trichters (1) herausgearbeitet ist, wobei außerdem vorgesehen ist, dass der Trichter (1) und das Förderband (3) von einem speziellen Gestell (8) gehalten werden;
• eine Wählrolle (5) mit horizontaler Achse, die zusammen mit dem entsprechenden Getriebemotor (7) leicht außerhalb des besagten frontalen Fensters (4) des Trichters (1) getragen wird, wobei vorgesehen ist, dass die Rolle (5) eine Reihe von radial, in gleichem Abstand voneinander angebrachte Schaufeln (5a) besitzt, deren freier Rand mit einem Sägeprofil versehen ist;
• ein Gehäuse (11), das dazu dient, die besagte Wählrolle (5) aufzunehmen und die Metallfasern unterhalb der Rolle in einen kleinen Trichter (12) zu befördern, dessen Abladeöffnung sich unterhalb der Position befindet, an welcher die Wählrolle (5) angebracht ist;
• ein Trägergestell (10), welches das besagte Auflagegestell (8) für den Trichter (1) und das Förderband (3) sowie die Wählrolle (5) hält.

2. Automatische Trennvorrichtung für Metallfasern gemäß Anspruch 1, welche außerdem folgendes umfasst:
• eine Reihe von Ladezellen (9), die zwischen dem Trägergestell (10) und dem Auflagegestell (8) für den Trichter (1) und das Förderband (3) angebracht sind;
• eine elektronische Einheit, die zur Steuerung des Betriebs der gesamten Vorrichtung dient, wobei vorgesehen ist, dass die Steuereinheit, in welcher das Gewicht der zu dosierenden Metallfasermenge eingestellt ist, mit den genannten Ladezellen (9) zusammenarbeitet, um die Vorrichtung sofort anzuhalten, sobald das Anfangsgewicht des in den Trichter beförderten Faserstranges sich exakt um den programmierten Gewichtswert verringert hat.

## Revendications

1. Séparateur automatique pour fibres métalliques à mélanger à des gâchages de ciments, **caractérisé en ce qu'**il comprend :
• Une trémie de chargement (1), ayant des parois latérales divergentes (2), sur le fond de laquelle est positionné un tapis roulant (3) qui s'enroule à circuit fermé, et avec un cours ascendant, autour de rouleaux ayant axe horizontal ; étant prévu que le premier rouleau (3a), guidé, est positionné en face arrière de la trémie (1), en proximité du fond, tandis que le second rouleau (3b), pourvu de son propre moteur (3c), est situé à environ mi-hauteur de la trémie, en position juste un peu plus interne par rapport à une fenêtre (4) réalisée sur la face avant de la trémie même (1) ; étant également prévu que la trémie (1) et le dit tapis roulant (3) sont supportés par un châssis spécifique (8) ;
• Un rouleau sélecteur (5), ayant axe horizontal, supporté avec son respectif moto-réducteur (7), en position juste un peu plus externe par rapport à la dite fenêtre frontale (4) de la trémie (1) ; étant prévu que le dit rouleau (5) présente une série de pâles radiales équidistantes (5a) dont le bord libre offre un profil en dent de scie ;
• Un carter (11) apte à contenir le dit rouleau sélecteur (5) et en mesure de convoyer les fibres métalliques en aval de celui-ci, vers une petite trémie (12) dont l'orifice de déchargement est situé à une hauteur inférieure par rapport à celle sur laquelle le rouleau (5) est situé ;
• Un cadre portant (10) qui soutient le dit châssis (8) de support de la trémie (1), du tapis roulant (3) et du rouleau sélecteur (5) ;

2. Séparateur automatique selon la revendication 1, comprenant également :
• Une série de cellules de chargement (9) interposées entre le cadre portant (10) et le châssis (8) qui soutient la trémie (1) et le tapis roulant (3) ;
• Une unité électronique qui contrôle le fonctionnement de tout le dispositif ; étant prévu que la dite unité de contrôle, sur laquelle le poids des quantités de fibres à doser est programmé, coopère avec les susdites cellules de chargement (9) aux fins de stopper immédiatement le dispositif en objet dès que le poids initial de l'écheveau de fibres chargé dans la trémie diminue de la valeur en poids exactement programmée.
